# EUROPÄISCHE PATENTSCHRIFT

(11) **EP 2 009 764 B1**
(45) Veröffentlichungstag und Bekanntmachung des Hinweises auf die Patenterteilung: **16.06.2010**
(21) Anmeldenummer: 08015362.0
(22) Anmeldetag: 02.04.2005
(51) Int. Cl.: H02J 9/00

(54) **Vorrichtung zur unterbrechungsfreien Stromversorgung**
Device for an uninterruptible power supply
Dispositif d'alimentation en courant continue

(30) Priorität: 14.04.2004 DE 102004018502
(43) Veröffentlichungstag der Anmeldung: 31.12.2008
(62) Teilanmeldung aus: 05732394.1
(73) Patentinhaber: Phoenix Contact GmbH & Co. KG, 32825 Blomberg (DE)
(72) Erfinder: Henkel, Hartmut, 32825 Blomberg (DE); Heinemann, Michael, 32791 Lage (DE); Zeuch, Jochen, 32825 Blomberg (DE)
(74) Vertreter: Blumbach - Zinngrebe

(56) Entgegenhaltungen:
- WO-A-03/060746
- WO-A-2004/012320
- US-A- 4 604 530
- US-A- 4 779 007
- US-A- 5 737 204
- US-B1- 6 329 796

## Beschreibung

Die Erfindung betrifft eine Vorrichtung zur unterbrechungsfreien Stromversorgung.

Um die Funktionsfähigkeit von elektronischen Geräten und Anlagen, wie zum Beispiel private Computernetze, auch bei Netzausfall sicherzustellen, werden sogenannte USV(unterbrechungsfreie Stromversorgungs)-Anlagen eingesetzt. USV-Anlagen sorgen dafür, dass bei Ausfall der Netzspannung eine Notstromversorgung der elektronischen Geräte oder Anlagen über die USV-Anlage erfolgt. Mit anderen Worten sorgt eine USV-Anlage dafür, dass bei einer Störung der Netzversorgung eine Umschaltung vom Netzbetrieb in einen Notstrombetrieb vorgenommen wird. Sobald die Netzversorgung wieder in Betrieb geht, schaltet die USV-Anlage vom Notstrombetrieb auf Netzbetrieb um.

Der Erfindung liegt die Aufgabe zugrunde, eine Vorrichtung zur unterbrechungsfreien Stromversorgung zu schaffen, bei der einem Benutzer das Anschalten weiterer elektrischer oder elektronischer Bauteile erleichtert wird.

Das technische Problem löst die Erfindung durch die Merkmale des Anspruchs 1.

Danach ist eine Vorrichtung zur unterbrechungsfreien Stromversorgung, kurz auch USV-Vorrichtung genannt, vorgesehen, welche Eingangsanschlüsse zum Anschalten an eine primäre Gleichspannungs-Versorgungseinrichtung, Anschlüsse zum Anschalten einer Ersatzstromquelle, erste Ausgangsanschlüsse zum Anschalten einer Last, eine Einrichtung zum Entkoppeln der Eingangsanschlüsse von den ersten Ausgangsanschlüssen bei Störung der primären Gleichspannungs-Versorgungseinrichtung, eine erste steuerbare Schalteinrichtung zum gesteuerten Anschalten der Ersatzstromquelle an die ersten Ausgangsanschlüsse bei Störung der primären Gleichspannungs-Versorgungseinrichtung und eine der ersten steuerbaren Schalteinrichtung zugeordnete Steuereinrichtung aufweist. Parallel zu den ersten Ausgangsanschlüssen ist ein mit einem Strombegrenzer strombegrenzter Speiseausgang geschaltet.

Hierdurch kann die Leistungsfähigkeit der USV-Vorrichtung verbessert werden, da elektrische Einrichtungen, beispielsweise Zustands-Signalisierungseinrichtungen, einfach und sicher angeschlossen werden können.

Vorzugsweise ist wenigstens eine zweite steuerbare Schalteinrichtung zum Ein- und Ausschalten wenigstens einer Zustands-Signalisierungseinrichtung vorgesehen, die an jeweils einem zweiten Ausgangsanschluss, der der zweiten Schalteinrichtung zugeordnet ist, anschaltbar ist. Ferner ist wenigstens ein dritter Ausgangsanschluss, der der zweiten Schalteinrichtung zugeordnet ist, in einem vorbestimmten Abstand zu dem strombegrenzten Speiseausgang angeordnet.

Auf diese Weise kann mittels einer vordefinierten Kontakt-Brücke der strombegrenzte Speiseausgang mit dem wenigstens einen dritten Ausgangsanschluss kurzgeschlossen werden. Ein wohl definiertes Anordnen des strombegrenzten Speiseausgangs bezüglich der dritten Ausgangsanschlüsse ermöglicht eine einfache und sichere Verdrahtung der zweiten Schalteinrichtung. Bei der zweiten steuerbaren Schalteinrichtung handelt es sich um ein Relais, vorzugsweise um ein Wechselrelais.

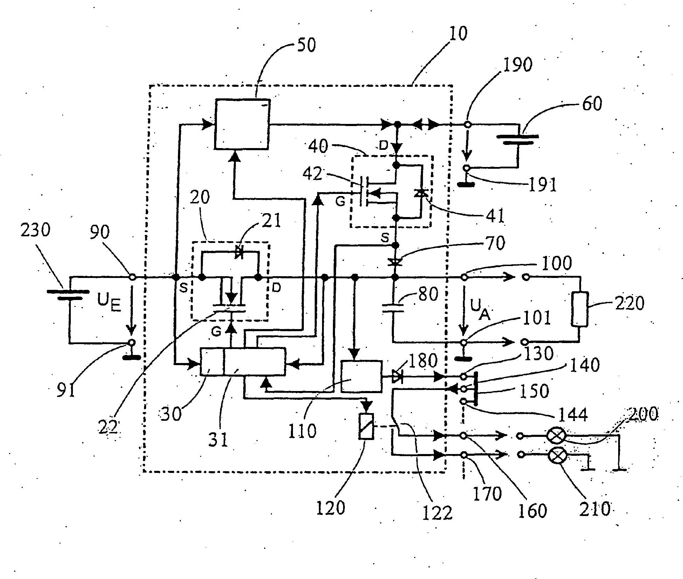

Die einzige Figur zeigt eine Vorrichtung zur unterbrechungsfreien Stromversorgung (USV), die nachfolgend kurz als USV-Vorrichtung bezeichnet wird. Die USV-Vorrichtung ist allgemein mit dem Bezugszeichen 10 versehen. Eingangsseitig weist die USV-Vorrichtung 10 zwei Eingangsklemmen 90, 91 auf, an die eine primäre Energieversorgungseinrichtung 230 angeschlossen ist, die im vorliegenden Beispiel eine Gleichspannung U_{E} liefert. Bei der primären Energieversorgungseinrichtung 230 kann es sich um ein 24V- Stromversorgungsgerät oder ein 24V-Netz handeln. Ausgangsseitig weist USV-Vorrichtung 10 zwei Ausgangsklemmen 100 und 101 auf, an die eine zu speisende, Last 220 angeschlossen ist. Zwischen der Eingangsklemme 90 und der Ausgangsklemme 100 ist eine Entkopplungseinrichtung 20 geschaltet. Die Entkopplungseinrichtung 20 weist eine Parallelschaltung aus einer Diode und einem Feldeffekttransistor 24 auf, der als Leistungstransistor betrieben wird. Der Kathodenanschluss ist mit der Ausgangsklemme 100 verbunden, wohingegen der Anodenanschluss der Diode 21 mit dem Eingangsanschluss 90 verbunden ist. Der Source-Anschluss S des Feldeffekttransistors 22 ist mit dem Anodenanschluss der Diode 21 verbunden, wohingegen der Drain-Anschluss D des Feldeffekttransistors 22 mit dem Kathodenanschluss der Diode 21 verbunden ist. Der Gate-Anschluss G des Feldeffekttransistors 22 ist mit einer Steuer- und Überwachungseinrichtung 30, 31 verbunden. Die Steuer- und Überwachungseinrichtung 30, 31 ist derart ausgebildet, dass sie den Feldeffekttransistor 22 über den Gate-Anschluss G im Netzbetrieb einschaltet und im Notstrombetrieb ausschaltet. Die Steuer- und Überwachungseinrichtung 30, 31 ist eingangsseitig mit dem Source-Anschluss S und dem Drain-Anschluss D des Feldeffekttransistors 22 verbunden, um die Eingangsspannung der USV-Vorrichtung 10 überwachen und auswerten zu können. Die Steuer- und Überwachungseinrichtung 30, 31 steuert den Gate-Anschluss G des Feldeffekttransistors 22 in Abhängigkeit von der überwachten Eingangsspannung an, um im Netzbetrieb die Verlustleistung zu reduzieren. Hierzu wird im Netzbetrieb der Feldeffekttransistor 22 über die Steuer- und Überwachungseinrichtung 30, 31 eingeschaltet, wodurch die Diode 21 überbrückt wird.

Ferner weist die USV-Vorrichtung 10 zwei Eingangsklemmen 190 und 191 auf, an die eine Ersatzstromquelle 60 angeschlossen ist. Die Ersatzstromquelle 60 kann wie im vorliegenden Beispiel ein Akkumulator sein. In diesem Fall ist zwischen der Eingangsklemme 90 und der Anschlussklemme 190 eine Ladeeinheit 50 geschaltet, die während des Netzbetriebes den Akkumulator 60 auflädt. Bei der Ladeeinheit 50 handelt es sich um eine an sich bekannte Einrichtung, welche automatisch erkennt, wenn der Akkumulator 60 aufgeladen ist. Die Ladeeinrichtung 50 wird ebenfalls über die Steuer- und Überwachungseinrichtung 30, 31 derart angesteuert, dass im Notstrombetrieb eine Aufladung des Akkumulator 60 nicht erfolgt. An dieser Stelle sei erwähnt, dass die Ladeeinrichtung 50 mehrere Funktionen bereitstellt. So dient sie einmal der Begrenzung des Ladestroms des Akkumulators 60. Ferner passt sie die Ladespannung im Verlauf der Aufladung an die Erfordernisse des Akkumulators 60 an. Die Aufladung wird beendet, wenn beispielsweise die primäre Energieversorgungseinrichtung 230 einen maximalen Laststrom bereitstellen muss. Eine Abschaltung der Batterieladung erfolgt ebenfalls, wenn der Akkumulator 60 aufgeladen ist.

Zwischen die Anschlussklemme 190 und Ausgangsklemme 100 ist eine weitere Schalteinrichtung 40 in Reihe mit einer Diode 70 geschaltet. Die Schalteinrichtung 40 enthält einen schnell schaltbaren Leistungstransistor 42 in Form eines Feldeffekttransistors 42, der zusammen mit der herstellungsbedingten inversen Diode 41 dargestellt ist. Der Drain-Anschluss D ist bei dieser Ausführungsvariante mit der Anschlussklemme 190 verbunden, während der Source-Anschluss S des schnell schaltbaren Feldeffekttransistors 42 mit dem Anodenanschluss der Diode 70 verbunden ist. Der Kathodenanschluss der Diode 70 ist mit der Ausgangsklemme 100 verbunden. Der Gate-Anschluss G des schnell schaltbaren Feldeffekttransistors 42 ist mit einem Ausgang der Steuer- und Überwachungseinrichtung 30, 31 verbunden. Die Diode 70 ist derart angeschaltet, dass sie im Notstrombetrieb in Durchlassrichtung und im Netzbetrieb in Sperrrichtung geschaltet ist, so dass im Netzbetrieb eine Ladung des Akkumulators 60 über die Schalteinrichtung 40 verhindert wird. Zwischen die Ausgangsklemmen 100 und 101 ist ein Kondensator 80 geschaltet, der insbesondere die im Notstrombetrieb vom Akkumulator 60 bereitgestellte Spannung glättet. Die Schalteinrichtung 40 dient zusammen mit der Diode 70 nicht nur zur Entkopplung des Akkumulator 60 von den Ausgangsklemmen 100 und 101, sondern auch zur Begrenzung des Notstroms während des Notstrombetriebs. Hierzu wird der Notstrom, das ist der durch den Feldeffekttransistor 42 fließende Strom des Notstrombetriebs, von der Steuer- und Überwachungseinrichtung 30, 31 überwacht und ausgewertet. In Abhängigkeit des gemessenen Notstroms wird der schnell schaltbare Feldeffekttransistor 42 über die Gate-Elektrode G pulsbreitenmoduliert, wodurch eine Reduktion des Stromes möglich ist.

An dieser Stelle sei kurz darauf hingewiesen, dass es erfindungsunerheblich ist, ob die Ersatzstromquelle 60, welche äquivalent auch als Ersatzspannungsquelle bezeichnet werden kann, interner Bestandteil der USV-Vorrichtung 10 ist, oder, wie in der Figur dargestellt, extern anschaltbar ist.

Gemäß einem weiteren Gesichtspunkt der Erfindung ist parallel zu den Ausgangsklemmen 100 und 101 ein strombegrenzter Speiseausgang 130 vorgesehen. Der Speiseausgang 130 ist über eine Diode 180 und einen Strombegrenzer 110 mit der Ausgangsklemme 100 verbunden. Der Kathodenanschluss der Diode 180 ist mit dem Speiseausgang 130 verbunden, wohingegen der Anodenanschluss der Diode 180 mit dem Ausgang des Strombegrenzers 110 verbunden ist. Auf diese Weise wird eine Rückspeisung der USV-Vorrichtung 10 über den Speiseausgang 130 vermieden.

Ferner weist die USV-Vorrichtung 10 vorzugsweise ein Wechselrelais auf, dessen symbolisch dargestellter Erregerstromkreis das Bezugszeichen 120 trägt, während der Ausgangsstromkreis des Wechselrelais durch das Bezugszeichen 122 gekennzeichnet ist. Der Erregerstromkreis 120 des Wechselrelais ist ausgangsseitig mit der Steuer- und Überwachungseinrichtung 30, 31 verbunden. Der Ausgangsstromkreis 122 weist im vorliegenden Beispiel drei Anschlüsse 140, 160 und 170 auf. An die Anschlüsse 160 und 170 können jeweils eine Leuchtdiode 200 beziehungsweise 210 zur Signalisierung des Zustandes der USV-Vorrichtung 10 angeschlossen sein. Beispielsweise signalisiert die Leuchtdiode 200, dass die USV-Vorrichtung 10 im Netzbetrieb arbeitet, während ein Aufleuchten der Leuchtdiode 210 signalisieren kann, dass die USV-Vorrichtung 10 im Notstrombetrieb arbeitet. Der weitere Anschlusskontakt 140 des Ausgangsstromkreises 122 ist in einem fest vorgegebenen Abstand zu dem Speiseausgang 130 angeordnet. Mittels einer entsprechend definierten Einlegebrücke 150 kann der Speiseausgang 130 mit der Ausgangsklemme 140 des Ausgangsstromkreises 122 kurzgeschlossen werden. Auf diese Weise ist es möglich, den Ausgangsstromkreis 122 des Wechselrelais fehlerfrei und sicher entweder im Netzbetrieb mit der Eingangsspannung U_{E} oder im Notstrombetrieb über den Akkumulator 60 zu speisen. Die Funktionsweise eines Wechselrelais ist allgemein bekannt, so dass eine detaillierte Beschreibung entfallen kann.

Wie bereits erwähnt, dient der Feldeffekttransistor 42 ferner dazu, während des Notstrombetriebs eine Strombegrenzung des Laststromes vorzunehmen. Erkennt die Steuer- und Überwachungseinrichtung 30, 31 dass der Strom durch den Feldeffekttransistor 42 zu groß wird, wird der Leistungsschalter 40 abgeschaltet. Nach einer kurzen Pause wird der Feldeffekttransistor 42 wieder eingeschaltet. Der Ein- und Aussschaltzyklus hängt von der Größe des überwachten Stromes durch die Drain-Source-Strecke des Feldeffekttransistors 42 ab, welche von der Steuer- und Überwachungseinrichtung 30, 31 überwacht und ausgewertet wird. Die Steuer- und Überwachungseinrichtung 30, 31 sorgt in Verbindung mit dem Feldeffekttransistor 42 dafür, dass im Notstrombetrieb hohe Kurzschlussströme wesentlich schneller und zuverlässiger begrenzt werden können als dies beispielsweise bei Verwendung von Relais der Fall ist. Um ein Laden des Akkumulators 60 während eines Netzbetriebes zu verhindern, ist die Diode 70 vorgesehen, da Feldeffekttransistoren keine inversen Spannungen sperren können, wie dies symbolisch durch die inverse Diode 41 angedeutet ist. Dank der dynamischen Strombegrenzung mit Hilfe der Steuer- und Überwachungseinrichtung 30, 31 und des Feldeffekttransistors 42 kann die Ausgangskennlinie der USV-Vorrichtung 10 der üblichen Ausgangskennlinie von Stromversorgungen angepasst und ein Spitzenstrom frühzeitig und zuverlässig begrenzt werden.

Nachfolgend wird die Funktionsweise USV-Vorrichtung 10 kurz erläutert.

Der einfacheren Erläuterung wegen sei angenommen, dass an die Eingangsklemme 90 und 91 eine Gleichspannung U_{E} angelegt sei, beispielsweise eine 24V-Gleichsspannung. Die Eingangsspannung wird von der Steuer- und Überwachungseinrichtung30, 31 an dem Source-Anschluss S und Drain-Anschluss D des Feldeffekttransistors 22 abgegriffen, überwacht und ausgewertet. Solange die Eingangsspannung U_{E} in einem vorgegebenen Toleranzbereich liegt, arbeitet die USV-Vorrichtung 10 im Netzbetrieb. Dies bedeutet, dass der Feldeffekttransistor 22 über den Gate-Anschluss G leitend gehalten wird. Für den Fall, dass der Akkumulator 60 nicht vollständig aufgeladen ist, erfolgt über die Ladeeinrichtung 50 die Aufladung des Akkumulators 60. Während des Netzbetriebs wird der zur Strombegrenzung benötigte Feldeffekttransistor 42 über die Steuer- und Überwachungseinrichtung 30, 31 im gesperrten Zustand gehalten. Die in Reihe zum Feldeffekttransistor 42 geschaltete Diode 70 verhindert einen unerwünschten Stromfluss über den Feldeffekttransistor 42 zum Akkumulator 60. Sobald die Steuer- und Überwachungseinrichtung 30, 31 eine Störung der Eingangsspannung U_{E}, das können unerwünschte Spannungsschwankungen oder der komplette Ausfall der primären Energieversorgungseinrichtung 230 sein, detektiert, wird der Feldeffekttransistor 22 über den Gate-Anschluss G ausgeschaltet, so dass eine Entkopplung zwischen den Eingangsklemmen 90, 91 und den Ausgangsklemmen 70, 100 und 101 stattfindet. Gleichzeitig wird der Feldeffekttransistor 42 über die Steuer- und Überwachungseinrichtung 30, 31 leitend geschaltet, so dass nunmehr eine Notstromversorgung der an die Ausgangsklemmen 100 und 101 angeschalteten Last 220 über den Akkumulator 6β erfolgt. Während des Notstrombetriebs überwacht die Steuer- und Überwachungseinrichtung 30, 31 den durch den Feldeffekttransistor 42 fließenden Strom, um ihn gegebenenfalls zu begrenzen. Wie bereits erwähnt, erfolgt die Begrenzung des Ausgangsstroms des Feldeffekttransistors 42 dadurch, dass die Steuer- und Überwachungseinrichtung 30, 31 über den Gate-Anschluss G eine Pulsbreitenmodulation des Ausgangsstroms durchführt, d. h. der Ein- und Ausschaltzyklus des Feldeffekttransistors 42 bestimmt dessen Ausgangsstrom.

Wie bereits erwähnt, wird die Änderung vom Netzbetrieb zum Notstrombetrieb dem erregerstromkreis 120 des Wechselrelais von der Steuer- und Überwachungseinrichtung mitgeteilt, so dass der jeweilige Zustand über die Leuchtdiode 200 beziehungsweise 210 dem Nutzer angezeigt werden kann.
An dieser Stelle sei darauf hingewiesen, dass weitere Relais oder auch Wechselrelais an die Steuer- und Überwachungseinrichtung 30, 31 angeschlossen werden können. Die entsprechenden Ausgangsanschlüsse der jeweilige Ausgangsstromkreise sind in definierten Abständen zu dem Speiseausgang 140 angeordnet, um auf eine einfache Art und Weise sowie fehlergesichert eine parallele Anschaltung der Relais beziehungsweise der Ausgangsstromkreise der Relais mittels der Einlegebrücke 150 zu ermöglichen.

## Patentansprüche

1. Vorrichtung zur unterbrechungsfreien Stromversorgung, mit
Eingangsanschlüssen (90, 91) zum Anschalten an eine primäre Gleichspannungs-Versorgungseinrichtung (230), Anschlüssen (190, 191) zum Anschalten einer Ersatzstromquelle (60),
ersten Ausgangsanschlüssen (100, 101) zum Anschalten einer Last (220),
einer Einrichtung (20) zum Entkoppeln der Eingangsanschlüsse (90, 91) von den Ausgangsanschlüssen (100, 101) bei Störung der primären Gleichspannungs-Versorgungseinrichtung (230), einer ersten steuerbaren Schalteinrichtung (40) zum gesteuerten Anschalten der Ersatzstromquelle (60) an die Ausgangsanschlüsse (100, 101) bei Störung der primären Gleichspannungs-Versorgungseinrichtung (230), einer der ersten Schalteinrichtung (40) zugeordneten Steuereinrichtung (31), und
einem parallel zu den ersten Ausgangsanschlüssen (100, 101) geschalteten, mit einem Strombegrenzer (110) strombegrenzten Speiseausgang (130).

2. Vorrichtung zur unterbrechungsfreien Stromversorgung nach Anspruch 1,
**gekennzeichnet durch**
wenigstens eine zweite steuerbare Schalteinrichtung (120) zum Ein- und Ausschalten wenigstens einer Zustands-Signalisierungseinrichtung (200, 210), die an jeweils einen zweiten Ausgangsanschluss (160, 170), der der zweiten Schalteinrichtung (120, 122) zugeordnet ist, anschaltbar ist, wobei wenigstens ein dritter Ausgangsanschluss (140), der der zweiten Schalteinrichtung (120, 122) zugeordnet ist, in einem vorbestimmten Abstand zu dem strombegrenzten Speiseausgang (130) angeordnet ist.

3. Vorrichtung zur unterbrechungsfreien Stromversorgung nach Anspruch 2,
**gekennzeichnet durch**
eine vordefinierte Kontakt-Brücke (150) zum Kurzschließen des strombegrenzten Speiseausgangs (130) und des wenigstens einen dritten Ausgangsanschlusses (140).

4. Vorrichtung zur unterbrechungsfreien Stromversorgung nach Anspruch 2 oder 3,
**dadurch gekennzeichnet, dass** die zweite steuerbare Schalteinrichtung (120) ein Relais, insbesondere ein Wechselrelais ist.

## Claims

1. An apparatus for uninterruptible power supply, comprising
input terminals (90,91) for connecting to a primary direct voltage supply device (230),
terminals (190, 191) for connecting an auxiliary power source (60),
first output terminals (100, 101) for connecting a load (220),
means (20) for decoupling the input terminals (90, 91) from the output terminals (100, 101) in case of a malfunction of said primary direct voltage supply device (230),
first controllable switching means (40) for controlled connecting said auxiliary power source (60) to the output terminals (100, 101) in case of a malfunction of said primary direct voltage supply device (230),
controlling means (31) assigned to said first switching means (40), and
a supply output (130) current limited by a current limiter (110), connected in parallel to the first output terminals (100, 101)

2. The apparatus for uninterruptible power supply according to claim 1, **characterized by**
at least one second controllable switching means (120) for switching on and off at least one state-signalling device (200, 210), which can be connected to each one of the second output terminals (160, 170) assigned to the second switching means (120, 122), wherein at least one third output terminal (140) assigned to said second switching means (120, 122) is arranged in a predetermined distance to the current limited supply output (130).

3. The apparatus for uninterruptible power supply according to claim 2, **characterized by**
a predefined contact bridge (150) for short-circuiting the current-limited supply output (130) and the at least one third output terminal (140).

4. The apparatus for uninterruptible power supply according to claim 2 or 3, **characterized in that**
said second controllable switching means (120) is a relay, in particular a change-over relay.

## Revendications

1. Dispositif pour l'alimentation électrique en tension continue, comprenant
des branchements (90, 91) pour le raccordement à un dispositif d'alimentation en tension continue primaire (230),
des branchements (190, 191) pour le raccordement d'une source de courant de remplacement (60),
des premiers branchements de sortie (100, 101) pour le raccordement d'une charge (220),
un dispositif (20) pour la dissociation des branchements d'entrée (90, 91) des branchements de sortie (100, 101) en cas de panne du dispositif d'alimentation en tension continue primaire (230),
un premier dispositif de commutation (40) contrôlable pour le raccordement contrôlé de la source de courant de remplacement (60) aux branchements de sortie (100, 101) en cas de panne du dispositif d'alimentation en tension continue primaire (230),
un dispositif de commande (31) attribué au premier dispositif de commutation (40), et
une sortie d'alimentation (130) branchée en parallèle avec les premiers branchements de sortie (100, 101) et limitée en courant avec un limiteur de courant (110).

2. Dispositif pour l'alimentation électrique continue selon la revendication 1,
**caractérisé par**
au moins un second dispositif de commutation (120) contrôlable pour la connexion et la déconnexion d'au moins un dispositif de signalisation d'état (200, 210), qui peut être raccordé à respectivement un second branchement de sortie (160, 170) qui est attribué au second dispositif de commutation (120, 122), au moins un troisième branchement de sortie (140), qui est attribué au second dispositif de commutation (120, 122), étant disposé à une distance prédéfinie de la sortie d'alimentation (130) limitée en courant.

3. Dispositif pour l'alimentation électrique continue selon la revendication 2,
**caractérisé par**
un pont de contact prédéfini (150) pour le court-circuitage de la sortie d'alimentation (130) limitée en courant et du au moins un troisième branchement de sortie (140).

4. Dispositif pour l'alimentation électrique continue selon la revendication 2 ou 3,
**caractérisé en ce que** le second dispositif de commutation (120) contrôlable est un relais, en particulier un relais commutateur.
